(19) Europäisches Patentamt
European Patent Office
Office européen des brevets

(11) **EP 1 519 158 B1**

(12) **EUROPÄISCHE PATENTSCHRIFT**

(45) Veröffentlichungstag und Bekanntmachung des Hinweises auf die Patenterteilung:
**11.08.2010 Patentblatt 2010/32**

(51) Int Cl.:
*G01D 5/26* (2006.01)    *G01D 5/38* (2006.01)

(21) Anmeldenummer: **04014425.5**

(22) Anmeldetag: **19.06.2004**

(54) **Positionsmesseinrichtung**

Position measuring device

Dispositif de mesure de position

(84) Benannte Vertragsstaaten:
**AT BE BG CH CY CZ DE DK EE ES FI FR GB GR HU IE IT LI LU MC NL PL PT RO SE SI SK TR**

(30) Priorität: **23.09.2003 DE 10345018**
**12.05.2004 DE 10424581**

(43) Veröffentlichungstag der Anmeldung:
**30.03.2005 Patentblatt 2005/13**

(73) Patentinhaber: **Dr. Johannes Heidenhain GmbH**
**83292 Traunreut (DE)**

(72) Erfinder:
• **Tondorf, Sebastian**
**83329 Waging am See (DE)**
• **Huber, Walter**
**83278 Traunstein (DE)**

(56) Entgegenhaltungen:
EP-A- 1 028 309     EP-B- 0 754 933
DE-A1- 3 818 218     DE-A1- 19 918 101
DE-A1- 19 941 318     US-B2- 6 359 691

**Beschreibung**

Die Erfindung betrifft eine Positionsmesseinrichtung nach dem Oberbegriff des Anspruchs 1.

Eine derartige Positionsmesseinrichtung zur Bestimmung der Relativlage zweier entlang einer Messrichtung zueinander beweglicher Objekte (Winkelmesseinrichtung) umfasst eine auf einem ringartigen Träger in Form eines Maßbandes angeordnete periodische Messteilung; eine Abtasteinheit zum optischen Abtasten der Messteilung mittels elektromagnetischer Strahlung (insbesondere mittels Licht), die in einer Beleuchtungseinrichtung (Lichtquelle) der Abtasteinheit erzeugt wird, wobei das Maßband und die Abtasteinheit entlang der Messrichtung relativ zueinander bewegbar sind; eine Abtastplatte der Abtasteinheit mit einer periodischen Teilung (Abtastteilung), die im Strahlengang der zum Abtasten der Messteilung dienenden elektromagnetischen Strahlung angeordnet ist, so dass diese elektromagnetische Strahlung sowohl mit der Abtastteilung als auch mit der Messteilung wechselwirkt; und einen Detektor der Abtasteinheit, dessen Detektorfläche zur Detektion der durch die Abtastteilung und die Messteilung modifizierten elektromagnetischen Strahlung dient und zur Detektion eines durch diese modifizierte elektromagnetische Strahlung gebildeten Intensitätsmusters mit einer Periode $P_D$ ausgebildet ist.

Die Periode $P_D$ ist so gewählt, dass sie bei linearer Anordnung des Maßbandes entlang einer Geraden mit der Periode des Streifenmusters (Vernier-Muster) übereinstimmt, das durch die Wechselwirkung der zur Abtastung des Maßbandes verwendeten Strahlung einerseits mit der Abtastteilung und andererseits mit der Messteilung erzeugt wird. Dieses Streifenmuster entspricht einer Schwebung, hervorgerufen durch die Kombination zweier periodischer Vorgänge, nämlich einerseits der Wechselwirkung der elektromagnetischen Strahlung mit der Abtastteilung und andererseits der Wechselwirkung der elektromagnetischen Strahlung mit der Messteilung.

Das Messprinzip, welches der vorgenannten Positionsmesseinrichtung zugrunde liegt, ist beispielsweise aus der EP 1 081 457 A2, der EP 1 028 309 A1 und der EP 0 754 933 B1 bekannt.

So ist in der EP 1 028 309 A1 eine optische Positionsmesseinrichtung zur Bestimmung der Relativlage zweier entlang einer Messrichtung zueinander beweglicher Objekte angegeben. Diese umfasst mindestens eine mit einem der beiden Objekte verbundene periodische Messteilung sowie eine mit dem anderen Objekt verbundene und somit relativ zu der Messteilung entlang der Messrichtung bewegbare Abtasteinheit. Die Abtasteinheit weist eine Lichtquelle, mindestens eine Abtastteilung sowie eine Detektoranordnung in einer Detektorebene auf, die aus mehreren strahlungsempfindlichen Detektorelementen besteht, welche in Messrichtung hintereinander angeordnet sind.

Wird bei einer Positionsmesseinrichtung der eingangs genannten Art das als Träger der Messteilung dienende Maßband ringartig angeordnet, insbesondere durch Aufbringen des Maßbandes auf einem zylindrischen Körper in Form einer Trommel, so kann die Positionsmesseinrichtung insbesondere zur Winkelmessung verwendet werden. Verglichen mit einer linearen Anordnung des Maßbandes (so dass sich dieses nach Art eines Maßstabes entlang einer Geraden erstreckt) treten bei der ringartigen Anordnung des Maßbandes, insbesondere entlang eines Kreisbogens, Effekte auf, die die Intensität der am Detektor der Abtasteinheit empfangenen Strahlung beeinträchtigen. Ein Effekt besteht darin, dass bei ringartiger Anordnung des Maßbandes aufgrund der hiermit verbundenen Krümmung des Maßbandes die innere Oberfläche des Maßbandes etwas gestaucht und die äußere Oberfläche des Maßbandes etwas gedehnt wird. Der Umfang dieser Stauchung bzw. Dehnung hängt von der Dicke des Maßbandes ab und ist selbstverständlich umso größer je größer dessen Dicke ist. Bei einer auf der äußeren Oberfläche eines ringartig angeordneten Maßbandes vorgesehenen Messteilung führt dieser Effekt zu einer Vergrößerung der Periode der Messteilung, da ja die äußere Oberfläche des Maßbandes (verglichen mit dessen linearer Anordnung) gedehnt wird.

Umgekehrt tritt bei der Abtastung eines ringförmig angeordneten Maßbandes mittels einer Abtasteinheit, die in einem definierten Abstand vor der äußeren, mit der Messteilung versehenen Oberfläche des Maßbandes angeordnet ist, ein Projektionseffekt auf, der bewirkt, dass - von der Oberfläche der Abtastplatte her gesehen - der Abstand, zwischen den einzelnen Markierungen (insbesondere Teilung'sstrichen) der Messteilung zu den äußeren Rändern der Abtastplatte hin scheinbar immer geringer wird. Dies ist auf die Projektion der gekrümmten, mit der Messteilung versehenen äußeren Ringfläche des Maßbandes auf die ebene, zweidimensionale, mit der Abtastteilung versehene Oberfläche der Abtastplatte zurückzuführen.

Die beiden vorgenannten Effekte sind gegenläufig, wobei jedoch der Projektionseffekt ausschließlich von der Krümmung des Maßbandes abhängt, während der Dehnungseffekt an der äußeren Oberfläche des Maßbandes sowohl von dessen Krümmung als auch von dessen Dicke abhängt. Bei vergleichsweise dicken Maßbändern mit einer Dicke von beispielsweise 300 μm, hat sich gezeigt, dass sich die beiden gegenläufigen Effekte über einen großen Bereich verschiedener Krümmungen soweit kompensieren, dass das an der strahlungsempfindlichen Oberfläche des Detektors erzeugte Identitätsmuster einen hinreichenden Kontrast für eine nachfolgende Auswertung aufweist. Bei sehr dünnen Maßbändern mit einer Dicke von deutlich weniger als 300 μm. insbesondere weniger als 100 μm, ist jedoch der Dehnungseffekt an der äußeren Oberfläche des Maßbandes nur noch so gering, dass er den Projektionseffekt bei starken Krümmungen nicht mehr hinreichend ausgleichen kann. Die vom Detektor detektierte Signalgröße kann wegen des schlechten Kontrastes des intensitätsmusters so klein werden, dass eine zuverlässige Auswertung zur Positionsbestimmung nicht möglich ist.

Der Erfindung liegt das Problem zugrunde, eine Positionsmesseinrichtung der eingangs genannten Art zu schaffen, die bei einfachem Aufbau die Kombination eines ringförmigen Maßbandes mit einer Abtastplatte mit einer ebenen, zweidimensionalen Oberfläche sowie mit einem zugehörigen Detektor mit einer zweidimensionalen strahlungsempfindlichen Oberfläche ermöglicht.

Danach sind die Periode der Abtastteilung $P_A$ einerseits und die Periode der Messteilung $P_M$ andererseits so aufeinander abgestimmt, dass $1/(1/P_A - 1/P_M) < P_D$ ist. Dies bedeutet, dass durch die Wechselwirkung des Lichtes mit der periodischen Abtastteilung einerseits und der periodischen Messteilung andererseits bei linearer Anordnung des Maßbandes ein Streifenmuster erzeugt würde, dessen Periode (gegeben durch den Ausdruck $1/(1/P_A - 1/P_M)$) kleiner wäre als die Periode $P_D$ eines Streifenmusters, für deren Abtastung die strahlungsempfindliche Oberfläche des Detektors ausgebildet und vorgesehen ist. Hierdurch soll insbesondere bei sehr dünnen Maßbändern die durch den oben genannten Projektionseffekt bei ringartiger Anordnung auftretende scheinbare Reduzierung der Periode des Maßbandes (die lokal zu einer Vergrößerung der Periode des Streifenmusters führt) kompensiert werden.

Dies kann erfindungsgemäß vorteilhaft einerseits dadurch erreicht werden, dass die Periode des Maßbandes vergrößert wird, so dass $P_M > 1/(1/P_A - 1/P_D)$, oder dadurch dass die Periode der Abtastplatte entsprechend verkleinert wird, so dass $P_A < 1/(1/P_D + 1/P_M)$. Hierbei wird davon ausgegangen, dass $P_M > P_A$ (einschließlich des nachfolgend erläuterten Grenzfalles $PA \rightarrow P_M$). Der umgekehrte Fall ist ebenfalls möglich, jedoch von geringerer praktischer Relevanz.

Die nachfolgenden Ausführungen, betreffend die Ausgestaltung der erfindungsgemäßen Positionsmesseinrichtung - auch in quantitativer Hinsicht - sind jeweils auch im Grenzfall $P_A \rightarrow P_M$ gültig. Die Erfindung lässt sich daher auch für diesen Grenzfall verwirklichen, wobei die Periode $P_D$ des zu detektierenden Streifenmusters gegen unendlich geht.

Mit der erfindungsgemäßen Lösung wird erreicht, dass bei ringartiger Anordnung des Maßbandes, insbesondere entlang eines Kreisbogens, der gleiche Detektor (mit einer ebenen strahlungsempfindlichen Oberfläche) als Bestandteil der relativ zu dem Maßband beweglichen Abtasteinheit verwendet werden kann, wie bei linearer Anordnung des Maßbandes. Hierdurch kann der Detektor in entsprechend größeren Stückzahlen kostengünstig hergestellt werden.

Hierbei soll ausdrücklich auch der Grenzfall umfasst sein, in dem die Periode der Abtastteilung gegen die Periode der Messteilung strebt, so dass die Periode des erzeugten Vernier-Streifenmusters (im linearen Fall) gegen unendlich strebt, vergleiche EP 0 754 933 B1.

Bei dem Detektor handelt es sich vorzugsweise um einen sogenannten strukturierten Detektor (wie z.B.

in der EP 1 028 309 A1 beschrieben), dessen strahlungsempfindliche Oberfläche durch periodisch hintereinander angeordnete Detektorbereiche, insbesondere in Form einzelner Detektorelemente (Fotoelemente), gebildet wird, wobei vorliegend die Periode $P_D$ der Anordnung der Detektorbereiche bzw. Detektorelemente größer ist als die Periode $1/(1/P_A - 1/P_M)$ des Streifenmusters, die bei erfindungsgemäßer Modifikation der Periode der Messteilung und/oder der Abtastplatte, von der zur Abtastung verwendeten elektromagnetischen Strahlung nach Wechselwirkung sowohl mit dem Abtastgitter als auch mit der Messteilung (im Fall einer ebenen Anordnung des Maßbandes) erzeugt würde. Mit anderen Worten ausgedrückt ist die Periode $P_D$ der Detektorbereiche bzw. Detektorelemente des Detektors so gewählt, dass sie für ein Maßband mit einer bestimmten Periode der Messteilung sowie eine Abtastplatte mit einer bestimmten Periode der Abtastteilung, wobei dieses Maßband zur linearen Anordnung entlang einer Geraden vorgesehen ist, genau mit der Periode des Streifenmusters übereinstimmt, das durch Wechselwirkung der zur Abtastung verwendeten Strahlung mit der Abtastteilung und der Messteilung erzeugt wird. Erfindungsgemäß ist jedoch für eine Abtastung eines ringartig entlang eines Kreisbogens angeordneten Maßbandes zur Winkelmessung die Periode der Messteilung und/oder die Periode der Abtastteilung so modifiziert, dass bei linearer Anordnung des genannten (für eine ringartige Anordnung vorgesehenen) Maßbandes die Periode der Detektorelemente größer wäre als die des Streifenmusters, das bei linearer Anordnung des Maßbandes und erfindungsgemäßer Modifikation der Periode der Messteilung und/oder der Abtastplatte aufträte. Hierdurch wird erreicht, dass bei gekrümmter Anordnung des Maßbandes der Projektionseffekt weitgehend kompensiert werden kann.

Erfindungsgemäß werden also bei einem Positionsmesssystem mit einem ringartig angeordneten Maßband und einem zugeordneten Detektor mit ebener, zweidimensionaler strahlungsempfindlicher Oberfläche die Periode der Abtastteilung und/oder die Periode der Messteilung - verglichen mit einer Positionsmesseinrichtung mit einem geradlinig angeordneten Maßband und einem identischen Detektor - so modifiziert, dass die Signalgröße der Abtastsignale deutlich größer ist, als wenn das Maßband einer linearen Positionsmesseinrichtung unmittelbar zur Bildung eines Winkelmesssystems verwendet würde, ohne Modifikation der Periode der Abtastteilung oder der Messteilung. Das zum Vergleich herangezogene lineare Positionsmesssystem soll dabei jeweils derart gestaltet sein, bei linearer Anordnung des Maßbandes entlang einer Geraden das an der strahlungsempfindlichen Oberfläche des Detektors auftretende Streifenmuster gerade die Periode hat, für deren Abtastung der entsprechende Detektor zur Erzielung einer maximalen Intensität der elektromagnetischen Strahlung an der strahluhgsempfindlichen Oberfläche ausgebildet und vorgesehen ist. Im Falle eines periodisch strukturierten Detektors bedeutet dies insbesondere, dass die strahlungsempfindliche Oberfläche des Detektors eine Periode aufweist, die bis auf ein ganzzahliges Vielfaches mit der Periode des Streifenmusters übereinstimmt.

Die hierfür erforderliche Modifikation der Periode der Abtastteilung bzw. der Messteilung beträgt für typische Dicken und Radien eines zur Winkelmessung verwendeten Maßbandes mindestens 0.05 % und höchstens 2 %; sie liegt insbesondere zwischen 0.1 % und 1 %.

Unter der Periode des Detektors wird dabei nicht zwingend die Periode der geometrischen Anordnung der einzelnen Detektorbereiche bzw. Detektorelemente verstanden. Vielmehr ist hierbei auch die elektrische Verschaltung der einzelnen Detektorbereiche bzw. Detektorelemente zu berücksichtigen. So ist bei einem strukturierten Detektor üblicherweise vorgesehen, dass auf einer Länge, die der Periode des an der strahlungsempfindlichen Oberfläche des Detektors empfangenen Streifenmusters entspricht, .vier Detektorelemente angeordnet sind, wobei jedes einer Phase, insbesondere einer der Phasen 0 %, 90 %, 180 %, 270 %, zugeordnet ist. Hierbei werden dann mehrere Gruppen von jeweils vier Detektoren hintereinander angeordnet, wobei aus den einzelnen Detektorgruppen jeweils diejenigen Detektorbereiche bzw. Detektorelemente miteinander verschaltet werden, die der gleichen Phase zugeordnet sind. Die Periode eines solchen strukturierten Detektors wird dann definiert durch die Breite jeweils einer Detektorgruppe, die mehrere Detektorbereiche, insbesondere vier Detektorbereiche, umfasst.

Bei Verwendung eines Detektors mit einer zweidimensionalen, ebenen strahlungsempfindlichen Oberfläche zur Abtastung der Messteilung auf dem ringartig angeordneten Maßband erstreckt sich der Detektor in einem definierten (radialen) Abstand von der mit der Messteilung versehenen Oberfläche des Maßbandes in tangentialer Richtung (d.h. parallel zu einer Tangente am äußeren Umfang des ringartig angeordneten Maßbandes). Bei einem strukturierten Detektor sind dementsprechend die einzelnen Detektorbereiche bzw. Detektorelemente entlang einer Richtung parallel zu einer Tangentialen des ringförmigen Maßbandes hintereinander angeordnet. Die beiden eingangs genannten Störeffekte, nämlich die Dehnung der mit der Messteilung versehenen äußeren Oberfläche des Maßbandes einerseits sowie der Projektionseffekt andererseits kompensieren sich selbst bei erfindungsgemäßer Korrektur der Abtastteilung und/oder der Periode der Messteilung nicht vollständig. Vielmehr überwiegt im (in tangentialer Richtung betrachtet) mittleren Bereich der strahlungsempfindlichen Oberfläche des Detektors der Dehnungseffekt, da die Projektion hier keine so große Rolle spielt. D. h., im mittleren Bereich der strahlungsempfindlichen Oberfläche des Detektors scheint (aufgrund des Dehnungseffektes) die Periode des ringförmig angeordneten Maßbandes (also der Abstand zwischen den einzelnen Markierungen bzw. Strichen der Messteilung) größer zu sein als vorgesehen, während an den - in tangentialer Richtung betrachtet - Randbereichen des Detektors aufgrund des Überwiegens des Projektionseffektes die Periode der Messteilung kleiner zu werden scheint. Die erfindungsgemäße Abstimmung der Periode der Abtastteilung einerseits und der Periode der Messteilung andererseits erfolgt derart, dass die Abweichungen des an der strahlungsempfindlichen Oberfläche erzeugten Streifenmusters von der Periode $P_D$ desjenigen Streifenmusters, für dessen Detektion die strahlungsempfindliche Oberfläche des Detektors (insbesondere hinsichtlich der periodischen Anordnung von Detektorbereichen bzw. Detektorelementen im Fall eines strukturierten Detektors) ausgelegt ist, möglichst wenig abweicht.

Zu beachten ist, dass sich die Erfindung auch in dem Fall anwenden lässt, in dem die Messteilung auf der inneren Oberfläche (inneren Ringfläche) des Maßbandes vorgesehen ist. In diesem Fall kommt neben dem Projektionseffekt ein in die gleiche Richtung wirkender Stauchungseffekt an der inneren Ringfläche zum tragen, wobei zur Kompensation die Periode der Messteilung zu vergrößern oder die Periode der Abtastteilung zu reduzieren wäre.

Sowohl die Abtastteilung als auch die Messteilung können durch sogenannte Amplitudengitter gebildet werden, die mit elektromagnetischer Strahlung (insbesondere Licht) derart wechselwirken, dass - entsprechend der Periode des jeweiligen Gitters - eine periodische Abfolge von helleren und dunkleren Lichtbereichen erzeugt wird. Wird die Positionsmesseinrichtung im sogenannten Reflektionsverfahren betrieben, so sind in dem entsprechenden Gitter jeweils Markierungen (Striche) von größerer und kleinerer Reflektivität im Hinblick auf die zum Abtasten verwendete elektromagnetische Strahlung (Licht) vorgesehen. Bei Anwendung des sogenannten Durchlichtverfahrens unterscheiden sich die periodisch hintereinander angeordneten Markierungen (Striche) demgegenüber in der Durchlässigkeit für die zum Abtasten verwendete elektromagnetische Strahlung (Licht).

Die Abtastteilung kann zudem insbesondere auch als sogenanntes MAP-Gitter ("Mixea Amplitude Phase"-Gitter) ausgebildet sein, wie z. B. aus den Figuren 2a und 2b der EP 1 081 457 A2 bekannt.

Alternativ kann die Abtastteilung auch durch ein Phasengitter gebildet werden.

Zur Abtastung des Maßbandes wird im Rahmen der vorliegenden Erfindung bevorzugt kollimierte (parallelisierte) elektromagnetische Strahlung in Form von Licht verwendet.

Weitere Merkmale und Vorteile der Erfindung werden bei der nachfolgenden Beschreibung eines Ausführungsbeispiels anhand der Figuren deutlich werden.

Es zeigen:

Fig. 1a    eine schematische Darstellung eines Ausschnittes eines ringförmig angeordneten Maßbandes mit einer periodischen Messteilung sowie einer zugeordneten Abtastplatte mit einer periodischen Abtastteilung und einem Detektor;

Fig. 1b      die strahlungsempfindliche Oberfläche eines strukturierten Detektors einer Abtasteinheit gemäß Figur 1a;

Fig. 2      eine grafische Darstellung des Einflusses des Dehnungseffektes und des Projektionseffektes auf die Periode eines an der strahlungsempfindlichen Oberfläche des Detektors erzeugten Streifenmusters bei einer Positionsmesseinrichtung gemäß den Figuren 1a und 1b aufgrund einer ringförmigen Anordnung des Maßbandes;

Fig. 3a und 3b      Auswirkungen des Dehnungseffektes sowie des Projektionseffektes auf die normierten Signalgrößen einer Positionsmesseinrichtung gemäß den Figuren 1a und 1b in Abhängigkeit von dem Radius des ringförmig angeordneten Maßbandes für zwei verschiedene Dicken des Maßbandes.

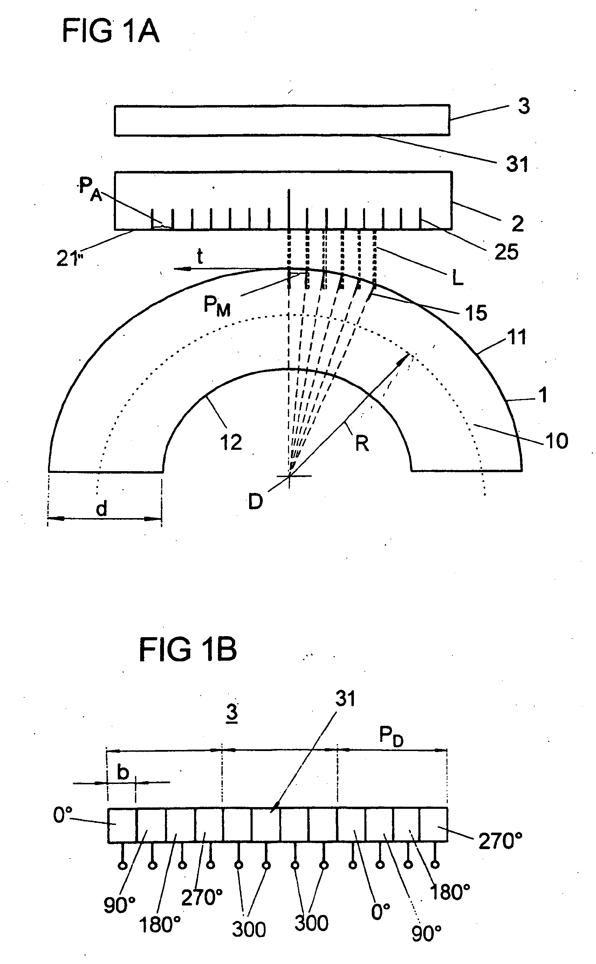

Figur 1a zeigt schematisch eine Positionsmesseinrichtung zur Winkelmessung mit einem ringförmig entlang eines Kreisbogens angeordneten Maßband 1 und einer Abtasteinheit, die eine Abtastplatte 2 und einen Detektor 3 in Form eines Fotodetektors umfasst.

Das Maßband 1 und die Abtasteinheit 2, 3 sind relativ zueinander beweglich, z. B. dadurch, dass das Maßband 1 am äußeren Umfang einer um eine Achse D drehbaren Trommel festgelegt ist und die Abtasteinheit 2, 3 stationär vor der äußeren Oberfläche 11 (äußere Ringfläche) des Maßbandes 1 (und von dieser in radialer Richtung R beabstandet) angeordnet ist.

Das ringförmig entlang eines Kreisbogens 10 mit dem Radius R angeordnet Maßband 1 der Dicke d weist eine mit einer periodischen Messteilung 15 in Form einer Strichteilung versehene äußere Ringfläche 11 sowie eine innere Oberfläche 12 (innere Ringfläche) auf. Durch die ringförmige Anordnung des flexiblen Maßbandes 1 ist dessen äußere Ringfläche 11 - verglichen mit einer linearen Anordnung des Maßbandes 1 entlang einer Geraden - gedehnt, während die innere Ringfläche 12 gestaucht ist.

Die Periode $P_M$ der periodischen Messteilung 15 des Maßbandes 1, also der Abstand benachbarter Striche der als Strichteilung ausgebildeten Messteilung 15, ist aufgrund der Dehnung der äußeren Ringfläche 11 des ringförmig angeordneten Maßbandes 1 etwas größer als bei linearer, flacher Anordnung des Maßbandes entlang einer Geraden ("Dehnungseffekt").

Eine dem Maßband 1 zugeordnete Abtastplatte 2 der Abtasteinheit 2, 3 ist vor der äußeren Ringfläche 11 des Maßbandes 1 und von dieser beabstandet angeordnet und ist an ihrer der äußeren Ringfläche 11 zugewandten Oberfläche 21 mit einer periodischen Abtastteilung 25 versehen. Die der äußeren Ringfläche 11 des Maßbandes 1 zugewandte Oberfläche 21 der Abtastplatte 2 sowie die dort ausgebildete Abtastteilung 25 erstrecken sich jeweils parallel zu einer Tangente t an der äußeren Ringfläche 11 des Maßbandes 1.

Von dem Maßband 1 her gesehen ist hinter der Abtastplatte 2 ein Detektor 3 mit einer strahlungsempfindlichen Oberfläche 31 angeordnet, bei dem es sich um einen sogenannten strukturierten Fotodetektor handelt. Dessen strahlungsempfindliche Oberfläche 31 wird gemäß Figur 1b gebildet durch eine Mehrzahl hintereinander angeordneter Detektorelemente in Form von Fotoelementen einer Breite b. Dabei bilden jeweils vier Detektorelemente eine Detektorgruppe, wobei die vier Detektorelemente einer Detektorgruppe jeweils einer der vier Phasen 0°, 90°, 180° und 270° zugeordnet sind. Die Periode $P_D$ dieser Anordnung von Detektorelementen entspricht dem Vierfachen der Breite b eines einzelnen Detektorelementes der Phase 0°, 90°, 180° oder 270°.

In Figur 1b sind ferner schematisch elektrische Anschlüsse 300 der einzelnen Fotoelemente dargestellt, die die strahlungsempfindliche Oberfläche 31 des Fotodetektors 3 bilden, wobei jeweils derselben Phase 0° oder 90° oder 180° oder 270° zugeordnete Fotoelemente unterschiedlicher Detektorgruppen miteinander verschaltet sind, so dass deren Ausgangssignale gemeinsam zur Auswertung einer Auswerteeinheit zugeführt werden können.

Von der strahlungsempfindlichen Oberfläche 31 des Fotodetektors 3 sind in Figur 1b drei Detektorgruppen bestehend aus jeweils vier Detektorelementen (Fotoelementen) der Phase 0° bzw. 90° bzw 180° bzw. 270° dargestellt. Hierbei handelt es sich nur um einen Ausschnitt der strahlungsempfindlichen Oberfläche 31 des Fotodetektors 3, die typischerweise zehn bis vierzehn derartiger aus jeweils vier Fotoelementen bestehender und periodisch hintereinander angeordneter Detektorgruppen aufweist.

Die vorbeschriebene Abtasteinheit 2, 3 der in den Figuren 1a und 1b dargestellten Positionsmesseinrichtung (Winkelmesseinrichtung) dient zur optischen Abtastung der Messteilung 15 auf der äußeren Ringfläche 11 des ringförmig entlang eines Kreisbogenabschnittes 10 angeordneten Maßbandes 1. Hierzu wird die mit der Messteilung 15 versehene äußere Ringfläche 11 des Maßbandes 1 in bekannter Weise mit kollimierter elektromagnetischer Strahlung L in Form von Licht bestrahlt, welches mittels einer geeigneten Beleuchtungseinheit (Lichtquelle) erzeugt und mittels einer geeigneten Kondensorlinse kollimiert wurde, wie beispielsweise aus der EP 1 081 457 A2 bekannt. Das zur Abtastung der Messteilung 15 auf der äußeren Ringfläche 11 des Maßbandes 1 verwendete Licht L wechselwirkt sowohl mit der Abtastteilung 25 der lichtdurchlässigen Abtastplatte 2, die in bekannter Weise im Strahlengang des Lichtes L liegt als auch mit der Messteilung 15 auf der äußeren Ringfläche 11 des Maßbandes 1, an der das Licht L reflektiert wird.

Die sowohl durch die Abtastteilung 25 als auch durch die Messteilung 15 modifizierten Lichtstrahlen L bilden auf der strahlungsempfindlichen Oberfläche 31 des Fotodetektors 3 ein sogenanntes Vernier-Streifenmuster mit einer Periode, die durch die Periode $P_A$ der Abtastteilung 25 und die Periode $P_M$ der Messteilung 15 festgelegt ist.

Die auf der strahlungsempfindlichen Oberfläche 31 des Fotodetektors 3 angeordneten Fotoelemente erzeugen ein diesem Streifenmuster entsprechendes elektrisches Signal, welches einer Auswerteeinheit zugeführt wird, die durch Auswertung der elektrischen Ausgangssignale des Fotodetektors 3 das Ausmaß einer Relativbewegung zwischen Maßband 1 und Abtasteinheit 2, 3 ermittelt.

Anhand Figur 1a wird deutlich, dass die Periode $P_M$ der Messteilung 15 von der Abtastplatte 2 her betrachtet in dem Bereich, der dem mittleren Bereich der Abtastplatte 2 gegenüberliegt, scheinbar größer ist als in den Bereichen, die den äußeren Enden der Abtastplatte 2 gegenüberliegen. Dies ist darauf zurückzuführen, dass aufgrund der Krümmung 1/R des ringförmig angeordneten Maßbandes 1 sowie aufgrund der tangentialen Anordnung der Abtastplatte 2 und des Fotodetektors 3 bezüglich des Maßbandes 1 die an der strahlungsempfindlichen Oberfläche 31 des Detektors 3 wirksame, ortsabhängige effektive Periode $P_{eff}$ des Maßbandes 1 auf einer Projektion der Messteilung 15 auf die Abtastplatte 2 entlang einer Richtung senkrecht zur Tangentialen t beruht, entlang der sich die Abtastplatte 2 erstreckt. Der beschriebene Projektionseffekt führt also zu einer scheinbaren Abnahme der Periode $P_M$ der Messteilung in den den tangentialen Randbereichen der Abtastplatte 2 gegenüberliegenden Bereichen verglichen mit dem der Mitte der Abtastplatte 2 gegenüberliegenden Bereich der Messteilung 15.

Dieser Projektionseffekt ist gegenläufig zu dem weiter oben beschriebenen Dehnungseffekt als Folge der Dehnung der äußeren Ringfläche 11 des Maßbandes 1 bei dessen ringförmiger Anordnung. Im Gegensatz zu dem Projektionseffekt ist jedoch der Dehnungseffekt nicht ortsabhängig.

Im Folgenden werden die Wirkungen des Dehnungseffektes sowie des Projektionseffektes quantitativ etwas näher beschrieben werden, indem die Auswirkungen dieser beiden Effekte auf das an der strahlungsempfindlichen Oberfläche 31 des Fotodetektors 3 erzeugte Streifenmuster erläutert werden, wobei das bei Abtastung eines linear, entlang einer Geraden angeordneten Maßbandes mit dem Streifenmuster eines ringartig angeordneten Maßbandes verglichen wird.

Bei einem linearen Positionsmesssystem mit einem flach entlang einer Geraden angeordneten Maßband, dessen periodische Messteilung die Periode $P_M$ aufweist, und mit einer dem Maßband zugeordneten, sich parallel zu diesem erstreckenden Abtastplatte, deren Abtastteilung die Periode $P_A$ (Amplitudenperiode) aufweist, gilt für die Periode des Streifenmusters, das dem weiter oben beschriebenen Intensitätsmuster entspricht und das durch Wechselwirkung des zur Abtastung des Maßbandes verwendeten Lichtes einerseits mit der Abtastteilung und andererseits mit der Messteilung erzeugt wird:

$$P_V = 1/(1/P_A - 1/P_M),$$

wobei $P_V$ als sogenannte Vernier-Periode bezeichnet wird, vergleiche EP 1 028 309 A1.

Aus der obigen Gleichung geht hervor, dass die Vernier-Periode $P_V$ umso kleiner ist, je stärker sich die Teilungsperioden $P_A$ und $P_M$ der Abtastteilung einerseits und der Messteilung andererseits unterscheiden.

So ergibt sich beispielsweise bei einer Periode der Abtastteilung $P_A$ = 19,512 $\mu$m und einer Periode der Messteilung $P_M$ = 20 $\mu$m für die Vernier-Periode $P_V$ des erzeugten Streifenmusters ("Hell-Dunkel-Muste") $P_V$ = 800 $\mu$m. Diese Periode des Streifenmusters ist bei der Auslegung eines strukturierten Fotodetektors zu berücksichtigen, mit dem aus dem Streifenmuster elektrische Ausgangssignale erzeugt werden sollen, die einer Auswerteeinheit zuzuführen sind. Hierzu werden beispielsweise bei einem Fotodetektor, der aus einer Vielzahl hintereinander angeordneter Fotoelemente besteht, pro Periode des Streifenmusters vier Fotoelemente hintereinander angeordnet, wobei jedes Fotoelement eine Ausdehnung (entlang der Erstreckungsrichtung der strahlungsempfindlichen Oberfläche des Fotodetektors) von 200 $\mu$m aufweist und einer bestimmten Phase, z. B. 0°, 90°, 180° oder 270°, zugeordnet wird. Die Ausdehnung der aktiven Fläche des jeweiligen Fotoelementes ist dabei etwas kleiner als die genannten 200 $\mu$m, da zwischen den einzelnen Fotoelementen jeweils ein Rand zur Isolation vorgesehen sein muss,

In diesem Fall stimmt also die Vernier-Periode $P_V$ des durch Wechselwirkung des zur Abtastung verwendeten Lichtes einerseits mit der Abtastteilung und andererseits mit der Messteilung erzeugten Streifenmusters genau mit der Periode $P_D$ überein, auf die die strahlungsempfindliche Oberfläche des Detektors hin abgestimmt ist.

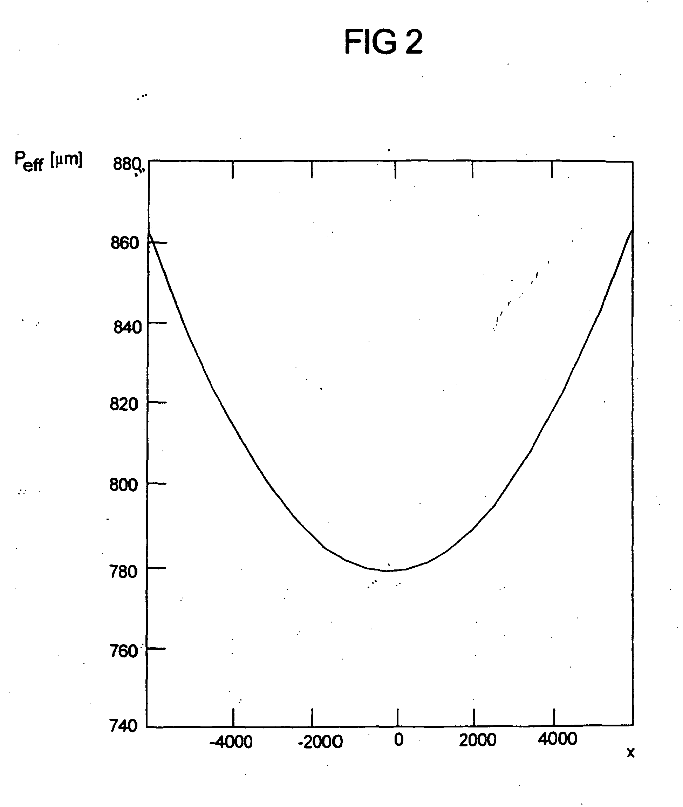

Wird nun derselbe Detektortyp, also ein Fotodetektor mit einer zweidimensionalen ebenen Oberfläche, gebildet durch periodisch hintereinander angeordnete Fotoelemente als Bestandteil einer Abtasteinheit für ein ringartig angeordnetes Maßband verwendet, so führen die beiden oben beschriebenen Effekte, nämlich der sogenannte Dehnungseffekt einerseits und der Projektionseffekt andererseits, dazu dass die an der strahlungsempfindlichen Oberfläche des Fotodetektors wirksame effektive Vernier-Periode $P_{eff}$ ortsabhängig ist. Und zwar ist sie im mittleren Bereich der strahlungsempfindlichen Oberfläche wegen des Dehnungseffektes vom Betrag her kleiner als die Vernier-Periode $P_V$ im linearen Fall, nimmt jedoch zu den Rändern hin wegen des Projektionseffektes zu. Dies ist in Figur 2 erkennbar, wo die effektive Vernier-Periode $P_{eff}$ in Abhängigkeit von der Position x am strukturierten Fotodetektor dargestellt ist. Es ist deutlich erkennbar, dass die effektive Vernier-Periode $P_{eff}$ in der Mitte des Fotodetektors (bei x = 0) einen kleineren Wert annimmt als die Vernier-Periode $P_V$ des Streifenmusters im linearen Fall ($P_V$ = 800 um) und dann zu den Rändern des Fotodetektors hin (für x > 0 bzw. x < 0) zunimmt. Unter der effektiven Vernier-Periode $P_{eff}$ wird dabei die lokal veränderliche Ausdehnung eines Paares Hell-Dunkel-Streifen des Vernier-Streifenmusters verstanden.

Betrachtet man die Phase des Streifenmusters, die im Falle eines linearen Maßbandes linear um 2*Pi innerhalb einer Detektorperiode zunimmt, sich also mit der Detektorphase deckt und damit einen optimalen Kontrast in den Detektorsignalen liefert, so eilt die Phase für ein gekrümmtes Maßband in der Mitte des Detektors zunächst etwas der Phase des Detektors voraus (da die effektive Vernier-Periode $P_{eff}$ hier kleiner ist als die Detektorperiode), während sie zum Rand des Detektors hin nacheilt (da die effektive Vernier-Periode $P_{eff}$ hier größer ist als die Detektorperiode). Durch diese Phasendifferenz wird der Kontrast in den Detektorsignalen verschlechtert. Die Phase des Streifenmusters lässt sich aus den lokalen Teilungsperioden der Abtastteilung und der Messteilung sowie den geometrischen Verhältnissen, wie der Krümmung der Messteilung und dem Abstand des Detektors von der Messteilung, bestimmen.

Die Zunahme der effektiven Vernier-Periode $P_{eff}$ zu den beiden Rändern der strahlungsempfindlichen Oberfläche des Fotodetektors hin ist eine Folge des Projektionseffektes, welcher zu den Rändern hin zu einer Reduzierung der Periode der Messteilung $P_M$ führt und damit zu einer Verringerung der Differenz $1/P_A$ - $1/P_M$, welche wiederum entsprechend der obigen Gleichung zu einer Zunahme der Vernier-Periode führt.

Da von den beiden oben angegebenen Effekten der Dehnungseffekt ortsunabhängig, der Projektionseffekt jedoch ortsabhängig ist, können sich diese beiden gegenläufigen Effekte nicht vollständig kompensieren. Es ist jedoch möglich, die Perioden $P_A$ und $P_M$ der Abtastteilung 25 einerseits und der Messteilung 15 andererseits so aufeinander abzustimmen, dass ein optimiertes Abtastsignal für eine nachfolgende Auswertung erhalten wird.

Eine einfache analytische Berechnung eines Korrekturwertes für die Periode $P_M$ der Messteilung 15 oder die Periode $P_A$ der Abtastteilung 25 ist nicht möglich. Denn zum einen hängen der Dehnungseffekt einerseits und der Projektionseffekt andererseits in unterschiedlicher Weise von der Krümmung des Maßbandes 1, d. h. von dessen Radius R ab und zum anderen ist der Dehnungseffekt darüber hinaus noch stark von der Dicke d des Maßbandes 1 (vergleiche Figur 1a) abhängig.

Ein optimaler Korrekturwert für die Periode $P_M$ der Messteilung 15 lässt sich nun z. B. dadurch bestimmen, dass für verschiedene Perioden $P_M$ die Intensität des in den Detektorbereichen gleicher Phase ankommenden Lichtes aufsummiert wird. Mit der Kenntnis der Phasenlage des Streifenmusters relativ zur Detektorphase kann dies in einfacher Weise durch eine Vektoraddition erfolgen. Durch iteratives Verändern der Periode $P_M$ der Messteilung 15 kann so ein Maximum der Abtastsignale ermittelt werden.

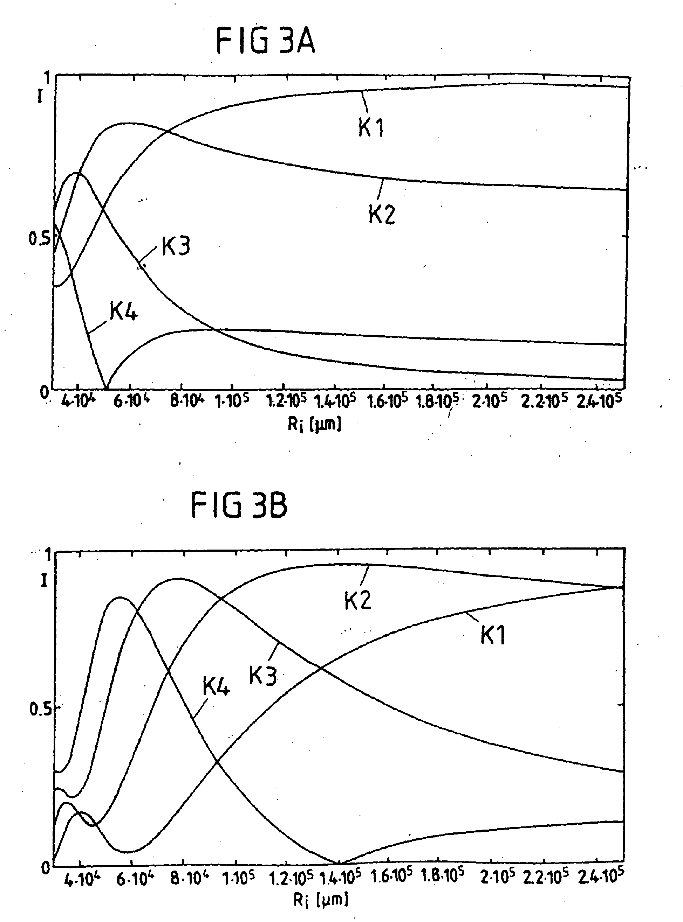

In den Figuren 3a und 3b ist für eine Dicke d des Maßbandes 1 von 300 $\mu$m (Figur 3a) sowie für eine Dicke d des Maßbandes 1 von 75 $\mu$m (Figur 3b) jeweils die Intensität der Abtastsignale (zur Normierung bezogen auf den linearen Fall) in Abhängigkeit von dem Radius $R_i$ einer Trommel dargestellt, auf die das Maßband 1 aufgewickelt ist, und zwar jeweils für unterschiedliche Perioden $P_M$ der Messteilung 15. In den Figuren 3a und 3b bezeichnet die Kurve K1 jeweils den Fall $P_M$ = 20 $\mu$m (also Übereinstimmung mit der Periode der Messteilung bei linearer Anordnung; die Kurve K2 den Fall $P_M$ = 20.02 $\mu$m; die Kurve K3 den Fall $P_M$ = 20.04 $\mu$m; und die Kurve K4 den Fall $P_M$ = 20.06 $\mu$m. Die Amplitudenperiode $P_A$ der Abtastteilung 25 beträgt in allen Fällen 19,512 $\mu$m und es wird von einem strukturierten Fotodetektor 3 ausgegangen, der mit seinen Fotoelementen vierzehn Vernier-Perioden erfasst, also insgesamt 56 hintereinander angeordnete, zu vierzehn Gruppen zusammengefasste Fotoelemente aufweist.

Es ist anhand der Figuren 3a und 3b deutlich erkennbar, dass für sehr kleine Trommelradien R, und damit für entsprechend kleine Radien R des ringförmig angeordneten Maßbandes 1 die Intensität I des vom Fotodetektor erzeugten Signales im Fall der jeweiligen Kurve K1 (Übernahme des Maßbandes aus dem linearen Positionsmesssystem ohne Korrektur der Periode $P_M$ der Messteilung 15) so stark abfällt, dass eine zuverlässige Auswertung des Signals nicht möglich ist. Dies ist darauf zurückzuführen, dass der Fotodetektor 3 ausgelegt ist auf ein Streifenmuster mit einer definierten Periode $P_D$, welche im Beispielsfall 800 $\mu$m beträgt und von der gemäß Figur 2 bei ringartiger Anordnung des Maßbandes die effektive Vernier-Periode $P_{eff}$ aufgrund des Dehnungseffektes sowie des Projektionseffektes deutlich abweicht. Dies gilt insbesondere für kleine Banddicken d, bei denen der Dehnungseffekt nur eine vergleichsweise geringe Auswirkung hat und daher der Projektionseffekt bei kleinen Trommelradien voll durchschlägt. Dies erklärt die deutlich stärkere Abnahme der Intensitätskurve K1 in Figur 3b verglichen mit Figur 3a. Denn Figur 3b liegt eine Banddicke von 75 $\mu$m zugrunde, während Figur 3a auf der vierfachen Banddicke von 300 $\mu$m beruht.

Ferner ist erkennbar, dass in beiden Fällen bei kleinen Trommelradien deutlich höhere Intensitäten des Detektorsignals erzielt werden können, wenn die Periode $P_M$ der Messteilung um 0.1 % (Kurve K2), um 0.2 % (Kurve K3) oder um 0.3 % (Kurve K4) gegenüber dem linearen Fall vergrößert wird. In Abhängigkeit von der Banddicke d gibt es für jeden Trommeldurchmesser $R_i$ einen eindeutigen Wert, um den die Periode $P_M$ der Messteilung 15 korrigiert (vergrößert) werden muss, um eine möglichst große Intensität der Abtastsignale zu erhalten. Vergleicht man etwa in den Figuren 3a und 3b jeweils die vier Kurven K1, K2, K3, K4, die unterschiedliche Korrekturwerte der Periode $P_M$ der Messteilung 15 repräsentieren, so ist im Fall der Figur 3a (entsprechend einer Banddicke d = 300 $\mu$m) bei einem Trommeldurchmesser von 5*10$^4$ $\mu$m eine Periode $P_M$ der Messteilung 15 im Bereich von 20.02 $\mu$m vorteilhaft, während im Fall der Figur 3b (Banddicke d = 75 $\mu$m) für den entsprechenden Trommeldurchmesser eine Periode $P_M$ der Messteilung 15 von etwa 20.06 $\mu$m besonders große Intensitäten des Detektorsignals liefert.

Selbstverständlich kann anstelle einer Korrektur der Periode $P_M$ der Messteilung 15, verglichen mit dem linearen Fall, auch eine Korrektur der Periode $P_A$ der Abtastteilung 25 erfolgen. Während im Fall einer Korrektur der Periode $P_M$ der Messteilung 15 die Korrektur durch Addition eines Korrekturwertes erfolgt; ist im Fall einer Korrektur der Periode $P_A$ des Abtastgitters die Periode $P_A$ etwas zu vermindern, entsprechend der Subtraktion eines Korrekturwertes. Denn, wie aus der obigen Gleichung für die Vernier-Periode $P_v$ hervorgeht, kommt es für die Einstellung der Vernier-Periode und damit auch der effektiven Vernier-Periode $P_{eff}$ auf die Differenz zwischen den Kehrwerten von $P_A$ und $P_M$ an.

Konkret gilt, dass bei einem auf die Periode $P_D$ des Vernier-Streifenmusters abgestimmten Fotodetektor zur Korrektur der effektiven Vernier-Periode $P_{eff}$ bei ringartiger Anordnung des Maßbandes entweder die Periode $P_M$ der Messteilung zu korrigieren ist, so dass $P_M > 1/(1/P_A - 1/P_D)$, oder die Periode $P_A$ der Abtastteilung so zu korrigieren ist, dass $P_A < 1/(1/P_D + 1/P_M)$.

**Patentansprüche**

1. Positionsmesseinrichtung mit

   - einer auf einem ringartig angeordneten Maßband vorgesehenen Messteilung,
   - einer Abtasteinheit zum optischen Abtasten der Messteilung mittels elektromagnetischer Strahlung,
   - einer Abtastplatte mit einer periodischen Abtastteilung, die im Strahlengang der zum Abtasten der Messteilung verwendeten elektromagnetischen Strahlung angeordnet ist, so dass diese sowohl mit der Abtastteilung als auch mit der Messteilung wechselwirkt, und
   - einem Detektor der Abtasteinheit, dessen Detektorfläche zur Detektion der elektromagnetischen Strahlung nach Wechselwirkung mit der Abtastteilung und der Messteilung dient und der zur Detektion elektromagnetischer Strahlung in Form eines Streifenmusters mit einer Periode $P_D$ ausgebildet ist,
   **dadurch gekennzeichnet,**
   **dass** die Periode $P_M$ der Messteilung (15) und die Periode $P_A$ der Abtastteilung (25) so abgestimmt sind, dass $1/(1/P_A - 1/P_M) < P_D$, wobei entweder $P_M$ um 0,05% bis 2% größer ist als $1/(1/P_A - 1/P_D)$ oder $P_A$ um 0,05% bis 2% kleiner ist als $1/(1/P_D + 1/P_M)$.

2. Positionsmesseinrichtung nach Anspruch 1, **dadurch gekennzeichnet, dass** die Periode $P_M$ der Messteilung (15) so gewählt ist, dass $P_M > 1/(1/P_A - 1/P_D)$, wobei die Abweichung der Periode $P_M$ der Messteilung (15) von dem Term $1/(1/P_A - 1/P_D)$ zwischen 0.1 % und 1 % liegt.

3. Positionsmesseinrichtung nach Anspruch 1 oder 2, **dadurch gekennzeichnet, dass** die Periode $P_A$ der Abtastteilung (25) so gewählt ist, dass $P_A < 1/(1/P_D + 1/P_M)$, wobei die Abweichung der Periode $P_A$ der Abtastteilung (25) von dem Term $1/(1/P_D + 1/P_M)$ zwischen 0.1 % und 1 % liegt.

4. Positionsmesseinrichtung nach einem der vorhergehenden Ansprüche, **dadurch gekennzeichnet, dass** die Detektorfläche (31) des Detektors (3) durch eine periodische Anordnung von Detektorbereichen gebildet wird, deren Periode ($P_D$) der Periode desjenigen Streifenmusters entspricht, für dessen Detektion der Detektor (3) ausgebildet ist.

5. Positionsmesseinrichtung nach Anspruch 4, **dadurch gekennzeichnet, dass** die Detektorbereiche durch Detektorelemente, insbesondere in Form von Fotoelementen, gebildet werden.

6. Positionsmesseinrichtung nach Anspruch 4 oder 5, **dadurch gekennzeichnet, dass** jeweils vier Detektorbereiche (0°, 90°, 180°, 270°) zu einer Detektorgruppe zusammengefasst sind und dass die Detektorgruppen periodisch mit einer definierten Periode ($P_D$) hintereinander angeordnet sind.

7. Positionsmesseinrichtung nach Anspruch 6, **dadurch gekennzeichnet, dass** die einzelnen Detektorbereiche (0°, 90°, 180°, 270°) einer Detektorgruppe jeweils einer Phase zugeordnet sind und dass phasengleiche Detektorbereiche unterschiedlicher Detektorgruppen elektrisch miteinander verschaltet sind.

8. Positionsmesseinrichtung nach einem der vorhergehenden Ansprüche, **dadurch gekennzeichnet, dass** der Detektor (3) eine ebene, im Wesentlichen zweidimensionale Detektorfläche (31) aufweist.

9. Positionsmesseinrichtung nach einem der vorhergehenden Ansprüche, **dadurch gekennzeichnet,**

**dass** die Messteilung (15) und/oder die Abtastteilung (25) durch ein Amplitudengitter gebildet werden.

10. Positionsmesseinrichtung nach einem der vorhergehenden Ansprüche, **dadurch gekennzeichnet, dass** die Abtastteilung (25) durch ein MAP-Gitter gebildet wird.

11. Positionsmesseinrichtung nach einem der Ansprüche 1 bis 8, **dadurch gekennzeichnet, daß** die Abtastteilung (25) durch ein Phasengitter gebildet wird.

12. Positionsmesseinrichtung nach einem der vorhergehenden Ansprüche, **dadurch gekennzeichnet, dass** die Messteilung (15) des Maßbandes (1) mittels elektromagnetischer Strahlung in Form kollimierten Lichtes abgetastet wird.

13. Positionsmesseinrichtung nach einem der vorhergehenden Ansprüche, **dadurch gekennzeichnet, dass** die Periode $P_M$ der Messteilung (15) und die Periode $P_A$ der Abtastteilung (25) so abgestimmt sind, dass die Intensität eines vom Detektor (3) erzeugten Ausgangssignals maximiert wird.

**Claims**

1. A position measuring device comprising

    - a measuring graduation provided on a measuring tape, which is arranged in a ring-like manner,
    - a sensing unit for optically sensing the measuring graduation by means of electromagnetic radiation,
    - a sensing plate comprising a periodic sensing graduation, which is arranged in the path of rays of the electromagnetic radiation used for sensing the measuring graduation, so that said sensing plate interacts with the sensing graduation as well as with the measuring graduation and
    - a detector of the sensing unit, the detector surface of which serves to detect the electromagnetic radiation after interaction with the sensing graduation and the measuring graduation and which detector is embodied for detecting electromagnetic radiation in the form of a stripe pattern comprising a period $P_D$,
    **characterized in that** the period $P_M$ of the measuring graduation (15) and the period $P_A$ of the sensing graduation (25) are matched in such a manner that $1/(1P_A - 1/P_M) < P_D$, wherein either $P_M$ is 0.05% to 2% greater than $1/(1/P_A - 1/P_0)$ or $P_A$ is 0.05% to 2% smaller than $1/(1/P_0 + 1/P_M)$.

2. The position measuring device according to claim 1, **characterized in that** the period $P_M$ of the measuring graduation (15) is chosen such that $P_M > 1(1/P_A - 1/P_D)$, wherein the deviation of the period $P_M$ of the measuring graduation (15) from the term $1/(1/P_A - 1/P_D)$ lies between 0.1% and 1%.

3. The position measuring device according to claim 1 or 2, **characterized in that** the period $P_A$ of the sensing graduation (25) is chosen such that $P_A < 1/(1/P_D = 1/P_M)$, wherein the deviation of the period $P_A$ of the sensing graduation (25) from the term $1/(1/P_D + 1/P_M)$ lies between 0.1% and 1%.

4. The position measuring device according to one of the preceding claims, **characterized in that** the detector surface (31) of the detector (3) is formed by means of a periodic arrangement of detector areas, the period ($P_D$) of which corresponds to that strip pattern, for the detection of which the detector (3) is embodied.

5. The position measuring device according to claim 4, **characterized in that** the detector areas are formed by means of detector elements, in particular in the form of photovoltaic cells.

6. The position measuring device according to claim 4 or 5, **characterized in that** four detector areas (0°, 90°, 180°, 270°) are in each case combined into a detector group and **in that** the detector groups are arranged behind one another periodically with a defined period ($P_D$).

7. The position measuring device according to claim 6, **characterized in that** the individual detector areas (0°, 90°, 180°, 270°) of a detector group are in each case assigned to one phase and **in that** detector areas, which are in phase, of different detector groups are electrically interconnected.

8. The position measuring device according to one of the preceding claims, **characterized in that** the detector (3) encompasses a plane, substantially two-dimensional detector surface (31).

9. The position measuring device according to one of the preceding claims, **characterized in that** the measuring graduation (15) and/or the sensing graduation (25) are formed by means of an amplitude grid.

10. The position measuring device according to one of the preceding claims, **characterized in that** the scanning grid (25) is formed by means of a MAP grid.

11. The position measuring device according to one of claims 1 to 8, **characterized in that** the sensing graduation (25) is formed by means of a phase grid.

12. The position measuring device according to one of the preceding claims, **characterized in that** the measuring graduation (15) of the measuring tape (1) is sensed by means of electromagnetic radiation in the form of collimated light.

13. The position measuring device according to one of the preceding claims, **characterized in that** the period $P_M$ of the measuring graduation (15) and the period $P_A$ of the sensing graduation (25) are matched such that the intensity of an output signal, which is generated by the detector (3), is maximized.

**Revendications**

1. Dispositif de mesure de position, avec

    - une graduation de mesure prévue sur un ruban de mesure disposé de façon annulaire,
    - une unité de balayage pour le balayage optique de la graduation au moyen d'un rayonnement électromagnétique,
    - une plaque de balayage avec une graduation de balayage périodique, disposée sur la trajectoire de du rayonnement électromagnétique utilisé pour le balayage de la graduation de mesure, de sorte que celle-ci interagit aussi bien avec la graduation de balayage qu'avec la graduation de mesure,
    - un détecteur de l'unité de balayage, dont la surface de détecteur sert à détecter le rayonnement électromagnétique, après interaction avec la graduation de balayage et la graduation de mesure, et qui est conçu pour détecter le rayonnement électromagnétique, sous la forme d'un motif en bande, avec une période $P_D$,
    **caractérisé en ce que**
    la période $P_M$ de la graduation de mesure (15) et la période $P_A$ de la graduation de balayage (25) sont accordées de telle manière, que $1/(1/P_A - 1/P_M) < P_D$, où soit $P_M$ est supérieur de 0,05% à 2% à $1/(1/P_A - 1/P_D)$, soit $P_A$ est inférieur de 0,05% à 2% à $1/(1/P_D - 1/P_M)$.

2. Dispositif de mesure de position selon la revendication 1, **caractérisé en ce que** la période $P_M$ de la graduation de mesure (15) est choisie de telle manière, que $P_M > 1/(1/P_A - 1/P_D)$, où l'écart de la période $P_M$ de la graduation de mesure (15) par rapport à l'expression algébrique $1/(1/P_A - 1/P_D)$ est compris entre 0,1% et 1%.

3. Dispositif de mesure de position selon la revendication 1 ou 2, **caractérisé en ce que** la période $P_A$ de la graduation de balayage (25) est choisie de telle manière, que $P_A < 1/(1/P_D - 1/P_M)$, où l'écart de la période $P_A$ de la graduation de balayage (25) par rapport à l'expression algébrique $1/(1/P_D - 1/P_M)$ est compris entre 0,1% et 1%.

4. Dispositif de mesure de position selon l'une des revendications précédentes, **caractérisé en ce que** la surface de détecteur (31) du détecteur (3) est formée par une disposition périodique des zones du détecteur, dont la période ($P_D$) correspond à la période du motif en bande pour lequel la détection du détecteur (3) est conçue.

5. Dispositif de mesure de position selon la revendication 4, **caractérisé en ce que** les zones de détecteur sont formées par des éléments de détecteur, en particulier sous la forme d'éléments photo.

6. Dispositif de mesure de position selon la revendication 4 ou 5, **caractérisé en ce que** quatre zones de détecteur (0°, 90°, 180°, 270°) sont à chaque fois réunies en un groupe de détecteur, et **en ce que** les groupes de détecteur sont disposées périodiquement les uns à la suite des autres, avec une période ($P_D$) définie.

7. Dispositif de mesure de position selon la revendication 6, **caractérisé en ce que** les différentes zones de détecteur (0°, 90°, 180°, 270°) d'un groupe de détecteur sont respectivement attribuées à une phase, et **en ce que** des zones de détecteur à phase identique de différents groupes de détecteur sont électriquement connectées entre elles.

8. Dispositif de mesure de position selon l'une des revendications précédentes, **caractérisé en ce que** le détecteur (3) comporte une surface de détecteur (31) plane, essentiellement bidimensionnelle.

9. Dispositif de mesure de position selon l'une des revendications précédentes, **caractérisé en ce que** la graduation de mesure (15) et/ou la graduation de balayage (25) est/sont formée(s) par une grille d'amplitude.

10. Dispositif de mesure de position selon l'une des revendications précédentes, **caractérisé en ce que** la graduation de balayage (25) est formée par une grille MAP.

11. Dispositif de mesure de position selon l'une des revendications 1 à 8, **caractérisé en ce que** la graduation de balayage (25) est formée par une grille de phase.

12. Dispositif de mesure de position selon l'une des revendications précédentes, **caractérisé en ce que** la graduation de mesure (15) du ruban de mesure (1) est balayée au moyen d'un rayonnement électromagnétique sous la forme d'une lumière collimatée.

13. Dispositif de mesure de position selon l'une des revendications précédentes, **caractérisé en ce que** la période $P_M$ de la graduation de mesure (15) et la période $P_A$ de la graduation de balayage (25) sont accordées de telle manière, que l'intensité d'un signal de sortie produit par le détecteur (3) est maximalisée.

## FIG 1A

## FIG 1B

# FIG 2

FIG 3A

FIG 3B

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 1081457 A2
- EP 1028309 A1
- EP 0754933 B1